# EUROPÄISCHE PATENTANMELDUNG

(11) **EP 1 605 156 A1**
(43) Veröffentlichungstag der Anmeldung: **14.12.2005**
(21) Anmeldenummer: 05011164.0
(22) Anmeldetag: 24.05.2005
(51) Int. Cl.: F02M 31/20

(54) **Kraftstoffkreislaufsystem**

(30) Priorität: 26.05.2004 DE 102004025782
(71) Anmelder: DaimlerChrysler AG, 70567 Stuttgart (DE)
(72) Erfinder: Breitschopf, Siegfried, 73635 Rudersberg (DE); Höttler, Thomas, 71636 Ludwigsburg (DE); Rosenberger, Ralf, 68766 Hockenheim (DE)

(57) **Zusammenfassung**

Die Erfindung betrifft ein erfindungsgemäßes Kraftstoffkreislaufsystem (1) mit mindestens einer Vorlauf-(2) und mindestens einer Rücklaufleitung (4), die zwischen einer Brennkraftmaschine (3) und einem Kraftstoffbehälter (5) eines Kraftfahrzeugs angeordnet sind. Hierbei ist die Rücklaufleitung (4) innerhalb des Kraftstoffbehälters (5) durch mindestens eine mit Austrittsöffnungen (8) versehene, im Kraftstoffbehälter (5) verlaufende Leitung (7) fortgesetzt, welche sich über einen wesentlichen Teil der Länge des Kraftstoffbehälters (5) erstreckt.

## Beschreibung

Die Erfindung betrifft ein Kraftstoffkreislaufsystem mit mindestens einer Vorlauf- und mindestens einer Rücklaufleitung nach dem Oberbegriff des Patentanspruchs 1 sowie einen Dieselmotor nach dem Oberbegriff des Patentanspruchs 8.

Aus der DE 32 14 874 A1 ist eine Kraftstoffanlage mit einem Kraftstoffvorratsbehälter für eine Otto-Brennkraftmaschine von Kraftfahrzeugen, die mit einer Kälteanlage ausgestattet sind, bekannt. Zum Kühlhalten des Kraftstoffvorrates ist im Kraftstoffvorratsbehälter ein durch die Kälteanlage zu betreibender Wärmetauscher angeordnet.

Bei zukünftigen Motoren kann es aufgrund des Einsatzes neuer Techniken zu einer massiven Erhöhung der Kraftstofftemperatur kommen. Bei den dann erreichten Kraftstofftemperaturen, die überwiegend oberhalb von 100°C liegen, kommt es jedoch zu Problemen, insbesondere mit Kraftstoffbehältern aus Kunststoff und/oder den im Kraftstoffbehälter befindlichen Zusatzeinrichtungen, die Kunststoff-Bauteile enthalten. In der Praxis werden bei Kunststoffbehältern häufig Kraftstoffkühlwendeln, d.h. gewendelte Leitungen, in Behälternähe eingesetzt, um die Temperatur im Kraftstoffbehälter unter einem vorgegebenen Wert zu halten. Die Kraftstoffkühlwendeln zeigen als nachteiligen Effekt eine relativ geringe Wärmeableitung. Des Weiteren können die hohen Rücklauftemperaturen auch zum Cracken des Kraftstoffs führen.

Aus der Praxis ist ebenfalls eine Kühleinrichtung bekannt, die einen in der Rücklaufleitung montierten, dem Fahrtwind des Kraftfahrzeugs ausgesetzten Kühler aufweist. Nachteilig bei der bekannten Einrichtung ist, dass sie durch den im Fahrtwind zu befestigenden Kühler baulich sehr aufwendig gestaltet und kostenintensiv zu fertigen ist.

Es ist daher die Aufgabe der vorliegenden Erfindung, ein Kraftstoffkreislaufsystem der eingangs genannten Art zu schaffen, bei der die Temperatur des in den Kraftstoffbehälter rückgeführten Kraftstoffs auf einfache Weise verändert werden kann, wobei die Kühleinrichtung konstruktiv möglichst einfach aufgebaut und kostengünstig herzustellen ist.

Diese Aufgabe wird gelöst durch ein Kraftstoffkreislaufsystem mit den Merkmalen des Patentanspruchs 1 sowie einem Dieselmotor mit den Merkmalen des Patentanspruchs 8.

Bei dem erfindungsgemäßen Kraftstoffkreislaufsystem mit mindestens einer Vorlauf- und mindestens einer Rücklaufleitung, die zwischen einer Brennkraftmaschine und einem Kraftstoffbehälter eines Kraftfahrzeugs angeordnet sind, ist die Rücklaufleitung innerhalb des Kraftstoffbehälters durch mindestens eine mit Austrittsöffnungen versehene, im Kraftstoffbehälter verlaufende Leitung fortgesetzt, welche sich über einen wesentlichen Teil der Länge des Kraftstoffbehälters erstreckt.

In einer bevorzugten Weiterbildung der Erfindung nach Anspruch 2 verläuft die Leitung im Kraftstoffbehälter im wesentlichen waagerecht.

In einem nach Anspruch 3 weitergebildeten Kraftstoffkreislaufsystem verläuft die innerhalb des Kraftstoffbehälters angeordnete Rücklaufleitung in Fahrtrichtung.

In einer alternativen Weiterbildung der Erfindung nach Anspruch 4 besteht die innerhalb des Kraftstoffbehälters angeordnete Rücklaufleitung aus zwei parallel zueinander verlaufenden und an ihren Enden miteinander verbundenen Leitungselementen.

In einer weiteren Ausgestaltung gemäß Anspruch 5 befindet sich die innerhalb des Kraftstoffbehälters angeordnete Rücklaufleitung im oberen Bereich des Kraftstoffbehälters.

In einer dazu alternativen Ausgestaltung nach Anspruch 6 zweigt eine weitere Leitung über ein steuerbares Ventil von der Rücklaufleitung ab und mündet direkt in den Kraftstoffbehälter.

In einer Ausgestaltung nach Anspruch 7 ist unterhalb des Bodens des Kraftstoffbehälters zusätzlich eine Lamellenvorrichtung zur Kühlung vorgesehen. Die Lamellenvorrichtung ist vorzugsweise über eine Wärmeleitpaste mit dem Boden des Behälters verbunden.

Gemäß Anspruch 8 der Erfindung ist ein Dieselmotor mit einem erfindungsgemäßen Kraftstoffkreislaufsystem ausgestattet.

Weitere Merkmale, Vorteile und vorteilhafte Ausgestaltungen der Erfindung ergeben sich aus den abhängigen Ansprüchen sowie aus der nachstehenden Beschreibung der Erfindung anhand der beigefügten Zeichnungen. Dabei zeigen in schematischer Art und Weise:
Fig. 1 eine erste bevorzugte Ausführungsform der Erfindung,
Fig. 2 eine zweite bevorzugte Ausführungsform der Erfindung,
Fig. 3 eine schematische Darstellung eines Kraftstoffkreislaufes mit separater Darstellung des erfindungsgemäßen Gegenstandes,
Fig. 4 eine weitere schematische Darstellung eines Kraftstoffkreislaufs mit erfindungsgemäßem Bypass.

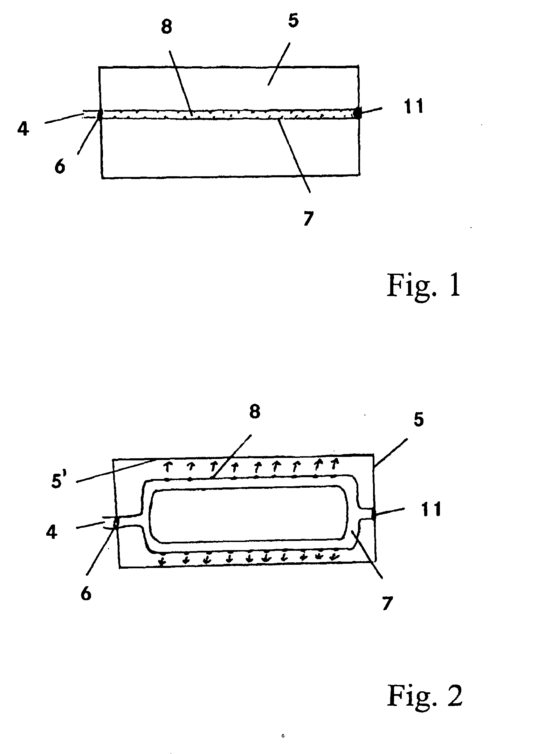

Fig. 1 zeigt eine schematische Darstellung eines Kraftstoffbehälters 5, in den eine von der nicht gesondert dargestellten Brennkraftmaschine kommende Rücklaufleitung 4 für den Kraftstoff an der Position 6 einmündet, welche innerhalb des Kraftstoffbehälters 5 durch mindestens eine mit Austrittsöffnungen 8 versehene, im wesentlichen waagerecht verlaufende Leitung 7 fortgesetzt ist und die sich über einen wesentlichen Teil der Länge des Kraftstoffbehälters 5 erstreckt.

In den nachfolgenden Zeichnungen werden der Übersichtlichkeit halber für funktionell gleiche oder gleichwirkende Komponenten dieselben Bezugszeichen verwendet. Insoweit wird auf die jeweils vorausgegangene Beschreibung verwiesen.

Fig. 2 zeigt eine schematische Darstellung eines Kraftstoffbehälters 5, in den eine von der hier nicht gezeigten Brennkraftmaschine kommende Rücklaufleitung 4 für den Kraftstoff an der Position 6 einmündet, wobei die innerhalb des Kraftstoffbehälters 5 angeordnete Rücklaufleitung 4 aus zwei parallel zueinander verlaufenden und an ihren Enden miteinander verbundenen Leitungselementen 7 besteht. Beide parallel verlaufende Leitungselemente 7 sind ebenfalls mit Austrittsöffnungen 8 versehen, wobei die Austrittsöffnungen 8 in Richtung der Innenfläche der Behälterwandung 5' angeordnet sind, damit der austretende Kraftstoff entlang der Wandung 5' auf den Boden des Kraftstoffbehälters 5 herabrieseln und so abkühlen kann. Eine Minimierung der Geräuschentwicklung durch das Verrieseln des Kraftstoffs, insbesondere an der Behälterwandung 5', kann in vorteilhafter Weise durch Anzahl, Größe und Anordnung oder Winkelstellung der Austrittsöffnungen 8 erreicht werden. Ferner wird insbesondere der Kraftstoffbehälter 5 aus Kunststoff durch den nicht nur an einer Stelle des Behälters 5 auftreffenden heißen Kraftstoffrücklauf geschont, da durch die vorgesehenen Austrittsöffnungen 8 eine im Hinblick auf die Temperatur des Kraftstoffrücklaufs gleichmäßige Beaufschlagung des Behälters 5 über die gesamte Länge erfolgt. Verzugserscheinungen des Kraftstoffbehälters 5, die durch den Einfluß unterschiedlicher Temperaturgradienten auf die Behälterwandung entstehen, kann so günstiger Weise entgegengewirkt werden.

Sowohl bei der in Fig. 1 als auch bei der in Fig. 2 gezeigten Ausführungsform, verläuft die innerhalb des Kraftstoffbehälters 5 angeordnete Rücklaufleitung 4 in Fahrtrichtung und ist im oberen Bereich des Kraftstoffbehälters 5 angeordnet. Beide Leitungen 7 können an der der Einmündung der Rücklaufleitung 4 gegenüber liegenden Seite mit einer stirnseitigen Wandung des Kraftstoffbehälters 5 verbunden sein. Diese Verbindung ist bevorzugt durch eine Schweißnaht 11 verwirklicht.

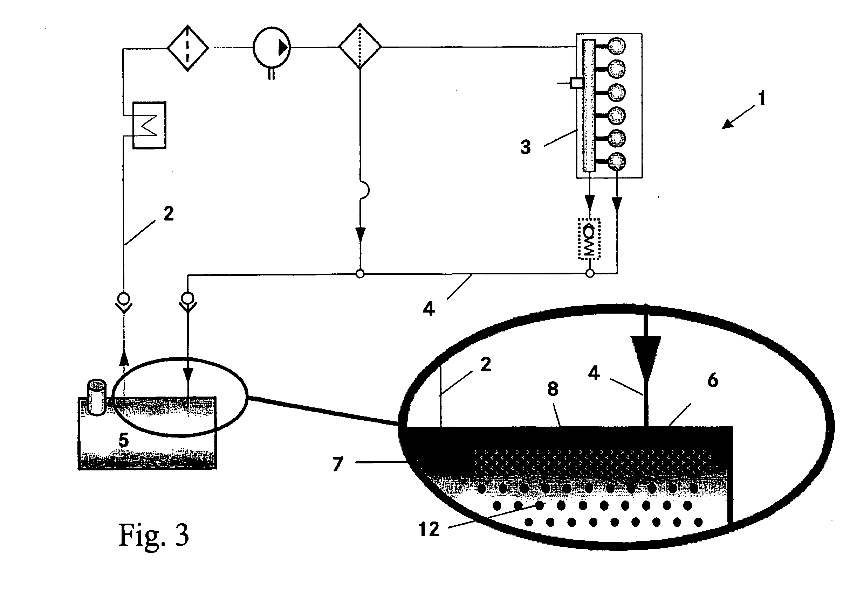

Fig. 3 zeigt ein Kraftstoffkreislaufsystem 1, das aus mindestens einer Vorlaufleitung 2 und mindestens einer Rücklaufleitung 4 besteht, welche zwischen einem Brennkraftmaschine 3 und einem Kraftstoffbehälter 5 angeordnet sind. Das Kraftstoffkreislaufsystem 1 fördert den Kraftstoff aus einem Kraftstoffbehälter 5 zu einer Brennkraftmaschine 3. Der nicht von der Brennkraftmaschine 3 verbrauchte Kraftstoff ist sehr heiß und wird über die Rücklaufleitung 4 zum Kraftstoffbehälter 5 zurückgefördert. Um die Temperatur im Kraftstoffbehälter 5 unter einem vorgegebenen Wert zu halten, muss der Kraftstoff gekühlt werden. Die maximale Temperatur, die im Kraftstoffbehälter 5 nicht überschritten werden soll, ist im wesentlichen abhängig von dem Material des Kraftstoffbehälters 5 und beträgt bei heutigen, bevorzugt aus Kunststoff gefertigten Kraftstoffbehältern 5 ungefähr 70°C bis 80°C. Die Kühlung des in der Rücklaufleitung 4 befindlichen Kraftstoffs ist beispielsweise bei als Common-Rail bezeichneten Systemen von Brennkraftmaschinen 3 zwingend erforderlich, da hierbei der über die Rücklaufleitung 4 zurückgeführte Kraftstoff von der Brennkraftmaschine 3 besonders stark erwärmt wird. Da außerdem die Leistungsregelung von Dieselbrennkraftmaschinen allein über das eingespritzte Kraftstoffvolumen erfolgt, hat ferner eine starke Erwärmung des Kraftstoffs eine spürbare Leistungsminderung zur Folge.
Um die Temperatur des Kraftstoffrücklaufs abzukühlen, ist die Rücklaufleitung 4 innerhalb des Kraftstoffbehälters 5 durch mindestens eine mit Austrittsöffnungen 8 versehene, im wesentlichen wagerecht verlaufende Leitung 7 fortgesetzt, welche sich über einen wesentlichen Teil der Länge des Kraftstoffbehälters 5 erstreckt.

Beide Ausführungsformen gemäß Fig. 1 und Fig. 2 der im Kraftstoffbehälter 5 angeordneten Rücklaufleitungen 4, welche im oberen Bereich des Kraftstoffbehälters 5 angeordnet sind, sollen den Kraftstoff beim Zurückführen in den Kraftstoffbehälter 5 kühlen. Hierzu dienen in beiden Ausführungsformen die mit Austrittsöffnungen 8 versehenen Leitungen 7 im Inneren des Kraftstoffbehälters 5, durch die der zurückgeführte Kraftstoff im Behälterinneren "verrieselt 12" oder verteilt wird. Hierbei kühlt sich die expandierende und vernebelte Flüssigkeit durch die freiwerdende Kondensationsenergie ab. Bevorzugt bei der Ausführungsform nach Fig. 2 erfährt der heiße Kraftstoff durch das Herunterlaufen an den Innenflächen 5' des Kraftstoffbehälters 5 eine weitere Kühlung, indem die Wärme, insbesondere bei Kraftstoffbehältern 5 aus Metall, über die Wände des Behälters 5, welche durch den Fahrtwind gekühlt werden, nach außen abgeleitet wird. Durch beide Maßnahmen wird in vorteilhafter Weise vermieden, dass die Temperatur im Kraftstoffbehälter 5 durch nicht verbrauchten, rückfließenden Kraftstoff wesentlich angehoben wird.

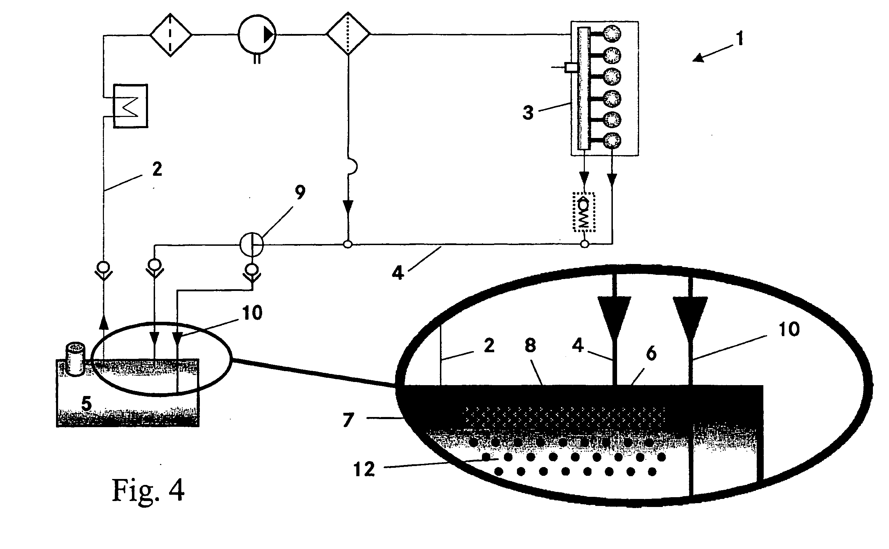

Wie in Fig. 4 dargestellt, kann der Kraftstoff mittels Bypass 10 auch ohne Verrieselung 12 in den Kraftstoffbehälter 5 zurückgeführt werden. Hierzu befindet sich in der Rücklaufleitung 4 ein Thermoumschaltventil 9, von dem aus eine Leitung 10 direkt in den Kraftstoffbehälter 5 mündet. Die Bedingung zur Aktivierung der Bypassschaltung erfolgt durch einen nicht gesondert dargestellten Temperatursensor, der je nach Umgebungstemperatur die Bypassschaltung aktiviert. Bei Minusgraden im Außenbereich des Fahrzeugs wird eine Verrieselung 12 des Kraftstoffrücklaufs nicht benötigt, da hier der aufgewärmte Kraftstoff verhindert, dass der im Kraftstoffbehälter befindliche Dieselkraftstoff aufgrund der niederen Temperaturen dickflüssig wird, versulzt oder ausflockt. Einem Unbrauchbarwerden des Kraftstoffs bei niederen Temperaturen wird somit durch die Bypassschaltung wirksam begegnet.

## Patentansprüche

1. Kraftstoffkreislaufsystem (1) mit mindestens einer Vorlauf- (2) und mindestens einer Rücklaufleitung (4), die zwischen einer Brennkraftmaschine (3) und einem Kraftstoffbehälter (5) eines Kraftfahrzeugs angeordnet sind,
**dadurch gekennzeichnet,**
**dass** die Rücklaufleitung (4) innerhalb des Kraftstoffbehälters (5) durch mindestens eine mit Austrittsöffnungen (8) versehene, im Kraftstoffbehälter (5) verlaufende Leitung (7) fortgesetzt ist, welche sich über einen wesentlichen Teil der Länge des Kraftstoffbehälters (5) erstreckt.

2. Kraftstoffkreislaufsystem (1) nach Anspruch 1,
**dadurch gekennzeichnet,**
**dass** die Leitung (7) im Kraftstoffbehälter (5) im wesentlichen waagerecht verläuft.

3. Kraftstoffkreislaufsystem (1) nach Anspruch 1,
**dadurch gekennzeichnet,**
**dass** die innerhalb des Kraftstoffbehälters (5) angeordnete Rücklaufleitung (4) in Fahrtrichtung verläuft.

4. Kraftstoffkreislaufsystem (1) nach einem der vorangegangenen Ansprüche,
**dadurch gekennzeichnet,**
**dass** die innerhalb des Kraftstoffbehälters (5) angeordnete Rücklaufleitung (4) aus zwei parallel zueinander verlaufenden und an ihren Enden miteinander verbundenen Leitungselementen (7) besteht.

5. Kraftstoffkreislaufsystem (1) nach einem der vorangegangenen Ansprüche,
**dadurch gekennzeichnet,**
**dass** sich die innerhalb des Kraftstoffbehälters (5) angeordnete Rücklaufleitung (4) im oberen Bereich des Kraftstoffbehälters (5) befindet.

6. Kraftstoffkreislaufsystem (1) nach einem der vorangegangenen Ansprüche,
**dadurch gekennzeichnet,**
**dass** eine weitere Leitung (10) über ein steuerbares Ventil (9) von der Rücklaufleitung (4) abzweigt und direkt in den Kraftstoffbehälter (5) mündet.

7. Kraftstoffkreislaufsystem (1) nach einem der vorangegangenen Ansprüche,
**dadurch gekennzeichnet,**
**dass** unterhalb des Bodens des Kraftstoffbehälters (5) zusätzlich eine Lamellenvorrichtung zur Kühlung vorgesehen ist.

8. Dieselmotor mit einem Kraftstoffkreislaufsystem (1) nach mindestens einem der vorangegangenen Ansprüche.
